# EUROPEAN PATENT APPLICATION

(11) **EP 4 843 698 A1**
(43) Date of publication of application: **25.11.2026**
(21) Application number: 25839779.3
(22) Date of filing: 09.02.2025
(51) Int. Cl.: B23K 26/36

(54) **METHOD FOR FORMING CUTTING EDGE OF MACHINING TOOL AND MACHINING DEVICE**

(30) Priority: 15.07.2024 CN 202410946179
(71) Applicant: Shanghai Nagoya Precision Tools Co., Ltd., Shanghai 201801 (CN)
(72) Inventor: SUN, Sirui, Shanghai 201801 (CN)
(74) Representative: Lermer, Christoph
(86) International application number: PCT/CN2025/076572
(87) International publication number: WO 2026/016456

(57) **Abstract**

A method for forming a cutting edge of a machining tool, comprising: setting a plurality of two-dimensional machining regions (30) for laser, these two-dimensional machining regions (30) being superimposed to form the boundary of a three-dimensional machining region (40). Each two-dimensional machining region (30) is defined by the machining boundary formed by a laser movement path. During laser machining, movement between starting points and end points is performed, the material (50) located in the three-dimensional machining region (40) is removed, and the three-dimensional machining region (40) forms an interface together with the material (50), so that a flank face (500) to be machined is generated on the surface of the material (50). The machining boundary of the two-dimensional machining region (30) at the interface of the material (50) is located outside the forming boundary (501) of the flank face (500).

## Description

### TECHNICAL FIELD

This invention relates to a method for manufacturing a cutting tool for machining, and more particularly to a method for machining materials using lasers to form a cutting edge.

### BACKGROUND TECHNOLOGY

Drill bits, as basic hole-making tools, are widely used in industrial machining. The quality of the drill tip has a significant impact on the drill bit's centering ability; a sharper tip results in better centering. For cutting tools made of solid diamond, especially small-to-medium diameter solid diamond drill bits, compared to other technologies, they offer advantages in deep hole machining of ceramic materials, including higher machining efficiency, better workpiece surface quality, and significantly longer tool life. Therefore, their application is becoming increasingly widespread.

However, diamond is a superhard material, and grinding to produce drill tips is not only time-consuming but also difficult to achieve the sharpness required for the drill bit's centering properties. This is especially true for small and medium-diameter drill bits, where machining the rake and flank faces is particularly challenging, and breakage and damage are more likely to occur during grinding. Therefore, electrical discharge grinding (EDG) and laser ablation are primarily used for machining diamond drill tips. Generally speaking, the main problem with EDG is the low material removal rate, leading to low machining efficiency. Laser machining, on the other hand, is gradually being adopted as an alternative to grinding in the manufacture of diamond tools.

Lasers convert electrical energy into light energy. The beam is reflected and refracted by optical instruments, eventually converging into a focal plane with a diameter of approximately 0.015 mm to 0.02 mm, also known as a "spot". The energy is highest in the area where the spot is located. By irradiating materials (such as diamond) with a focused high-energy laser beam, the light energy is converted into heat energy. Within a spatial range where the beam energy density is higher than the material damage threshold, the material in the area where the spot is located is ablated and removed through photo-thermal-electric effects (such as vaporization, evaporation, electron avalanche, etc.).

To meet machining requirements, a galvanometer (motor) is used to adjust the position of the optical instrument, causing the light spot to move along a predetermined path at a specified speed. The number of times the light spot moves along the predetermined path is also preset. Thus, under the action of the galvanometer, the moving light spot ablates the material from point to line, achieving the removal of localized material.

After the light spot acts on the object along several predetermined routes, it forms a two-dimensional machining area, further expanding the area of material removal. Several two-dimensional machining areas overlap, increasing the volume of material removal and forming a three-dimensional machining area, ultimately achieving the purpose of shaping, such as forming the rake face and flank face to obtain a drill tip.

Laser machining tools can still experience edge ablation due to material heating (e.g., diamond), resulting in blunt and dull drill tips. This leads to poor drill bit centering, shortened tool life, reduced machining accuracy, and deviations in the specifications of the machined products, failing to meet machining quality (accuracy) requirements.

In summary, the existing laser- machined diamond drill tips are not reliable enough and cannot meet the requirements of high-precision machining.

### SUMMARY

One object of the present invention is to provide a method for forming a cutting edge of a machining tool, thereby forming a sharper cutting edge and increasing the precision of the machined product.

Another objective of this invention is to provide a method for forming a cutting edge of a machining tool, using a laser to machine diamond to form a sharper cutting edge.

Another object of the present invention is to provide a method for forming a cutting edge of a machining tool, such that the cutting edge near the tool axis forms a sharper drill tip.

Another object of the present invention is to provide a method for forming a cutting edge of a machining tool, such that the cutting edge near the tool axis forms a sharper diamond tip.

Laser, as commonly understood, is light emitted by atoms when stimulated. Electrons in an atom absorb energy, transition from a lower energy level to a higher energy level, and then fall back down, releasing energy as photons. Lasers can be categorized into continuous-wave lasers and pulsed lasers. Based on their pulse width characteristics, they are classified as thermal lasers and cold lasers.

Laser emitters, such as, but not limited to, nanosecond, femtosecond, or picosecond lasers, produce lasers such as infrared, blue, green, violet, or extreme violet light.

Ultrafast lasers refer to pulsed lasers with output pulse widths of tens of nanoseconds or less, i.e., picoseconds or less. The core components involved in ultrafast lasers include oscillators, stretchers, amplifiers, and compressors.

The optical axis refers to the center line of a light beam (or light column), or the axis of symmetry of an optical system. The light beam should rotate around this axis without any change in its optical properties.

In machining, the term "material" or "workpiece" typically refers to materials or semi-finished products used to manufacture parts or components; it is the object of machining during the mechanical process. That is, after machining the workpiece, a product that meets the machining or design requirements is obtained, such as hole-making tools and milling cutters. For workpieces used for tool machining, they typically include an axis, with the axial length greater than the radial length.

A rake face (the face that first contacts the workpiece during machining) and a flank face are machined onto the workpiece. The intersection of the rake face and flank face forms an intersection line, and a (cutting) edge is formed at this line. The edge closest to the axis forms the cutting tip. The cutting tip is the cutting edge that first contacts the workpiece along the tool's feed direction to initiate cutting. During cutting, as the tool feeds, the cutting side of the rake face moves towards and contacts the workpiece. The flank face, located away from the rake face, contacts the workpiece later than the rake face, or may not contact it at all. In this invention, the flank face is also referred to as the flank face to be machined.

Precision machining refers to machining techniques that achieve extremely high levels of precision and surface quality. For example, in tool machining, dimensions, straightness, contour accuracy, surface roughness, and cutting edge radius are all achieved at a level exceeding micrometers.

Machining equipment (or machining centers) are machining devices with multiple axes of motion. These are the X, Y, and Z axes, which move along straight lines in a right-handed Cartesian coordinate system, and the A, B, and C axes, which rotate around the X, Y, and Z axes, respectively. For example, CNC machine tools typically have various control software programs that receive and issue commands in code form to automate the machining of workpieces. For instance, by forming the method for forming the drill tip of a machining tool provided in this invention into control code, it can be automatically implemented on machining equipment to obtain products that meet machining or design requirements.

A method for forming a cutting edge of a machining tool includes:
Several two-dimensional machining areas are defined for laser machining, and these two-dimensional machining areas are superimposed to form the boundary of the three-dimensional machining area;
Each two-dimensional machining area is defined by the machining boundary formed by the laser movement path. During machining, the laser spot moves between each starting point and ending point and removes the material (such as diamond) located in the three-dimensional machining area. At the same time, the three-dimensional machining area and the material (such as diamond) form an interface, which is the flank face to be machined.

In a two-dimensional machining area at the interface of materials (e.g., diamond), the machining boundary is located outside the forming boundary of the flank face (e.g., the machining boundary falls within the area of the cutting side of the rake face or the space around the cutting side of the rake face).

The method of the present invention selectively uses a laser to first form a rake face on a material (e.g., diamond) and then form a flank face on the material (e.g., diamond).

The method of the present invention uses a laser. The laser beam is directed away from the rake face and propagates from the back of the rake face toward the cutting side of the rake face. That is, the starting point of the laser beam ablation of the material is located in the back of the rake face, and finally reaches the surrounding space area where the cutting side of the rake face is located.

The method of the present invention utilizes a laser beam whose propagation direction forms a machining angle with the flank face to be machined.

To obtain a better cutting edge (i.e. a sharp cutting edge), especially the cutting edge forming the cutting tip (such as the drill tip of a hole-making tool) close to the workpiece axis, the machining angle is the sum of the first angle and the second angle. The first angle is the angle required to make the laser optical axis parallel to the flank face to be machined, and the second angle is the angle required to make the radial outer edge of the laser spot contact the flank face to be machined.

In the method of this invention, the boundary of the three-dimensional machining area includes at least one two-dimensional machining area that falls on the material (e.g., diamond), forming an interface with the material. The angle between the boundary of the three-dimensional machining area falling on the material (e.g., diamond) and the axis of the workpiece depends on the type and variety of the cutting tool.

In the method of this invention, the boundary of the three-dimensional machining area has at least two interfaces with the material, namely, two two-dimensional machining areas at the interface of the material (e.g., diamond), namely, a first two-dimensional machining area and a second machining area, and two flank faces to be shaped are generated on the surface of the material, namely a first flank face and a second flank face. The first two-dimensional machining area intersects with the second two-dimensional machining area. The machining boundary of the first two-dimensional machining area is located outside the shaping boundary of the first flank face, and the machining boundary of the second two-dimensional machining area is located outside the shaping boundary of the second flank face.

When the boundary of a three-dimensional machining area includes at least two two-dimensional machining areas on a material (such as diamond), for ease of machining, the laser is usually first adjusted to a first machining angle to form the first two-dimensional machining area, and then adjusted to a second machining angle to form the second two-dimensional machining area. Similarly, when two two-dimensional machining areas are on a material (such as diamond), the first and second two-dimensional machining areas are formed first, and then the laser is adjusted to a third machining angle to form the third two-dimensional machining area.

To improve the automation level of machining, the three-dimensional machining area is represented in the form of computer code. This area includes a region defined by several sets of laser start and end points. Among these start and end points, at least the machining boundary of the two-dimensional machining area formed by the three-dimensional machining area falling on the diamond is located outside the forming boundary of the flank face to be machined. When the three-dimensional machining area is coded as a parallelepiped, it can be implemented relatively easily.

Another method for forming the cutting edge of a machining tool includes:
Using a laser, a rake face is first formed on the diamond, and then a flank face is formed on the diamond.

When machining the flank face, the rake face faces away from the direction of laser beam propagation, and the laser beam propagates from the back of the rake face toward the cutting side of the rake face; simultaneously,
The direction of laser propagation forms a machining angle with the flank face of the machined part;
The machining angle is the sum of the first angle and the second angle. The first angle is the angle required to make the laser optical axis parallel to the flank face to be machined, and the second angle is the angle required to make the radial outer edge of the laser spot contact the flank face to be machined.

The laser forms a two-dimensional machining area from the starting point along the set machining path, which is the end point of one machining operation. The machining boundary of the two-dimensional machining area should be larger than the forming boundary of the material.

The laser is controlled to move from the starting point to the end point according to the set machining path, thus forming a three-dimensional machining area with several two-dimensional machining areas overlapping (i.e., the laser moves back and forth from the starting point to the end point according to the set machining path);

Materials within the three-dimensional machining area (such as diamonds) are removed by the laser, and the surface of the material (such as diamonds) at the boundary of the three-dimensional machining area is the flank face to be machined.

In order to implement the method of the present invention, especially to implement it automatically and efficiently, it is usually necessary to configure a controller and a processor to load the machining code and control the various components of the device to automatically implement according to the pre-set computer code.

By applying the method of this invention to a machining equipment with multiple motion axes (such as a three-axis machine tool, a four-axis machine tool, and a five-axis machine tool), lasers can be used to automate the cutting edge machining of workpieces.

The beneficial effects of the technical solution of this invention are as follows:
The method of the present invention involves a laser beam propagating from the back of the rake face towards the cutting side of the rake face. By utilizing the fact that a portion of the laser beam is blocked by the workpiece, the problem of poor tip forming (dull, not sharp) caused by the characteristics of the laser is effectively eliminated, thereby improving the centering ability of the drill bit and effectively increasing the service life of machining tools (such as hole machining tools).

Compared to commonly used laser-machined cutting tips (such as drill tips), this method enables one-time forming, reducing subsequent machining steps, thereby shortening machining time and correspondingly lowering machining costs. The laser galvanometer's output scanning plane is larger than the outer edge of the bar stock, ensuring thorough ablation and resulting in a finished flank face that meets requirements.

### BRIEF DESCRIPTION OF THE DRAWINGS

Figure 1 is a schematic diagram of an embodiment of a cutting tool for machining;
Figure 2 is a schematic diagram of an embodiment of machining the flank face of a cutting tool using the method of the present invention;
Figure 3 is a schematic diagram of another angle of an embodiment of the method of the present invention for machining the flank face of a cutting tool;
Figure 4 is a schematic diagram of an embodiment of a machining tool manufactured using the method of the present invention;
Figure 5 is a schematic diagram of an embodiment of the incident angle required to implement the method of the present invention using a laser;
Figure 6 is a schematic diagram of an embodiment of a machining tool with multiple flank faces manufactured using the method of the present invention.

### DETAILED DESCRIPTION

The technical solution of the present invention will be described in detail below with reference to the accompanying drawings. The embodiments of the present invention are only used to illustrate the technical solution of the present invention and are not intended to limit it. Although the present invention has been described in detail with reference to preferred embodiments, those skilled in the art should understand that modifications or equivalent substitutions can be made to the technical solution of the invention without departing from the spirit and scope of the technical solution of the present invention, and all such modifications and substitutions should be covered within the scope of the claims of the present invention.

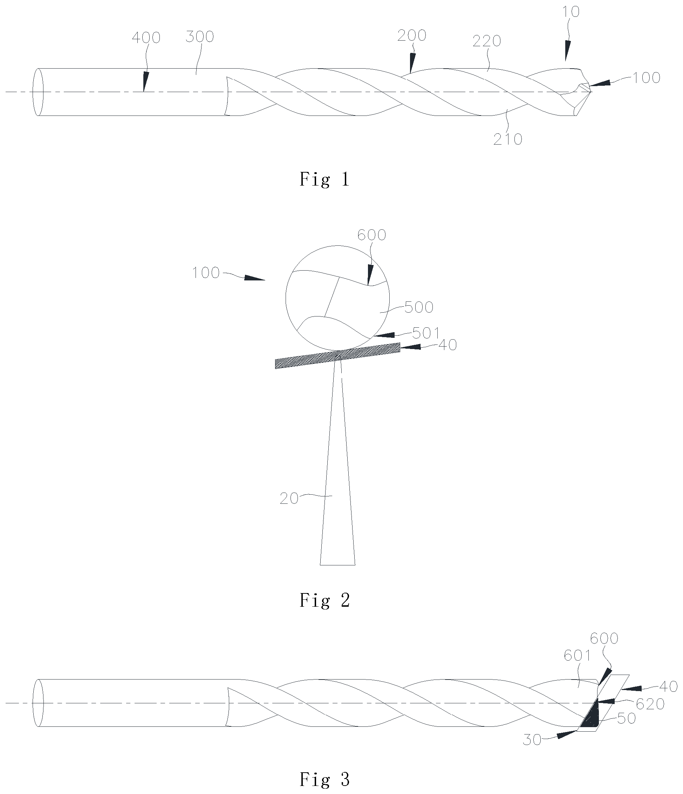

Figure 1 is a schematic diagram of an embodiment of a cutting tool for machining. As shown in Figure 1, the cutting tool 10 includes an elongated body member having a longitudinal axis 400, a shank 300 for mounting on rotating machinery, and a cutting end 100 (or drill bit) for performing machining. Along the machining feed direction, the cutting end 100 first contacts the workpiece to be machined and performs cutting operations, such as drilling and milling. A cutting member 200 is placed after the cutting end 100. Taking a drill bit for drilling as an example, the cutting member 200 typically includes a chip removal groove 210 and a pressing section 220, etc.

The cutting end 100 includes at least one rake face and one flank face. The intersection of the rake face and the flank face forms an intersection line, and the intersection line forms a (cutting) edge. The edge closest to the axis forms a cutting tip. In cutting, the cutting tip is the first cutting edge to contact the workpiece and initiate cutting. As the tool feeds, the cutting side of the rake face faces the workpiece and makes contact, while the flank face, located away from the cutting side, contacts the workpiece later than the cutting side or does not contact the workpiece at all.

In this embodiment, a laser is used as the machining method to remove material (e.g., diamond) and form the desired shape, such as the desired flank face. The machining area formed by the laser spot acting on the material once along a set trajectory is a two-dimensional machining area. Each two-dimensional area can include several start and end points. For example, the laser spot moves along a straight line from the first start point to the first end point, and then moves along a straight line from the first end point to the second end point. The trajectory between the first and second end points is the first path of the laser spot, and the trajectory from the second start point to the second end point is the second path. The first and second paths intersect. Then, the laser spot moves along a straight line from the second end point to the third end point. The trajectory between the third start point and the third end point is the third path of the laser spot. The third path intersects the second path and is either intersecting or parallel to the first path. Thus, a large number of laser spot trajectories formed within a focal plane define the two-dimensional machining area. That is, each two-dimensional machining area is defined by the machining boundary formed by the start and end points on the laser movement path, and the line connecting the start and end points. When the set trajectory of the light spot is arc, arc, or circle, it should be understood as a machining trajectory composed of many extremely short straight line segments with a start and an end point.

During machining, the laser spot moves between various starting and ending points. As the spot repeatedly acts on the material along a set trajectory, it removes material (e.g., diamond) layer by layer within the three-dimensional machining area, forming a three-dimensional machining region, such as a cuboid or cylinder. This is a three-dimensional machining region formed by the superposition of several two-dimensional machining regions. Simultaneously, the three-dimensional machining region forms an interface with the material (e.g., diamond), which is the flank face to be machined. The machining boundary of the two-dimensional machining region at the material (e.g., diamond) is outside the forming boundary of the flank face. The intersection of the flank face and the rake face is the cutting edge.

Figure 2 is a schematic diagram of an embodiment of machining the flank face of a tool using the method of the present invention, and Figure 3 is a schematic diagram of another angle of an embodiment of machining the flank face of a tool using the method of the present invention. As shown in Figures 2 and 3, the laser beam 20 propagates from the back of the rake face 600 towards the cutting side 601 of the rake face, such that the starting point of the laser beam ablation of the material is located in the back of the rake face, and finally reaches the surrounding space area where the cutting side 601 of the rake face is located.

The laser beam 20, focused into a spot, moves between various starting and ending points. As the spot repeatedly acts on the material along a set trajectory, the two-dimensional machining areas are layered to form a three-dimensional machining area 40 (e.g., a parallelepiped), and the material 50 within the three-dimensional machining area is removed layer by layer. At this point, the three-dimensional machining area and the material (e.g., diamond) form an interface, namely the flank face 500 to be machined. The machining boundary of the two-dimensional machining area 30 at the material interface is located outside the forming boundary 501 of the flank face.

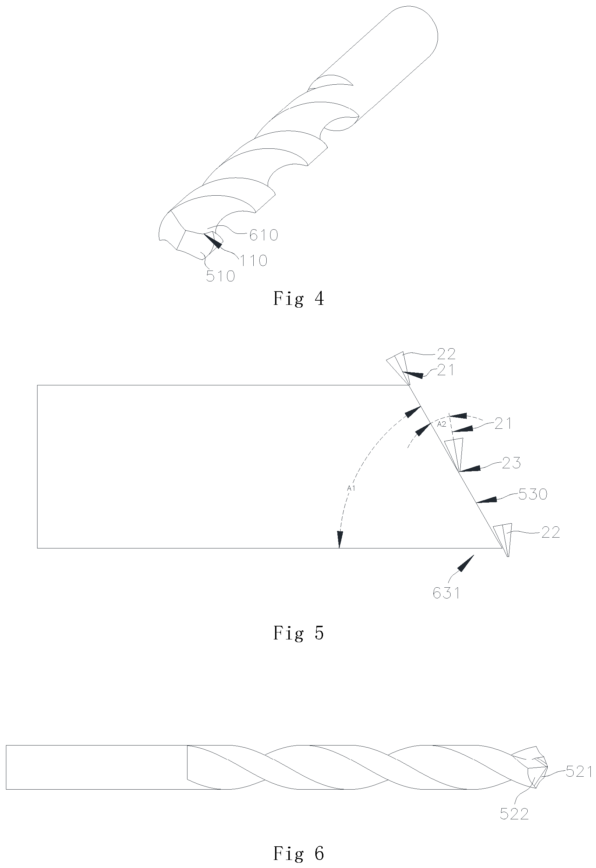

The machining tool manufactured using this method is shown in Figure 4. It has a diamond cutting edge, including a first rake face 610 and a first flank face 510. To form a sharper cutting edge and increase the precision of the machined product, a programmed control system is used during machining. The three-dimensional machining area is presented in the form of computer code, including the area defined by several sets of laser start and end points. Among these start and end points, at least the machining boundary of the two-dimensional machining area falling on the diamond material is located outside the forming boundary of the flank face to be machined. Referring to Figures 2 and 3, the laser beam is directed towards the back of the first rake face 610 and finally reaches the peripheral space area where the cutting side of the first rake face 610 is located. When the laser spot repeatedly acts on the diamond according to the set trajectory, the diamond is removed layer by layer, forming the three-dimensional machining area 40. The machining boundary of the two-dimensional machining area at the junction of the three-dimensional machining area and the diamond is located outside the forming boundary of the flank face. The diamond surface at the junction with the three-dimensional machining area is the flank face 510.

The laser beam has a three-dimensional shape in space, and before it focuses to form a spot, the beam converges towards the optical axis, which can be regarded as a laser beam with a conical shape. Furthermore, the spot can also be regarded as a circular surface in space, with radial dimensions. Therefore, when the method of this embodiment uses a laser to remove material, it is necessary to adjust the laser angle to enhance the sharpness of the cutting edge, especially to make the cutting edge near the tool axis form a sharper drill tip, as shown in Figure 5. The laser machining angle is obtained by the sum of the first angle A1 and the second angle A2. The first angle A1 should be the angle required to make the laser optical axis parallel to the flank face to be machined. The second angle A2 is the angle required to make the radial outer edge of the laser spot contact the flank face to be machined, so that the focal point of the laser energy contacts the material, achieving maximum material removal efficiency. The conical laser beam 22 is emitted from the rake face away from the cutting edge and finally reaches the peripheral space area where the cutting side 631 of the rake face is located. Initially, when the laser beam 22 contacts the material, the optical axis 21 is adjusted to be parallel to the flank face to be machined. As an example, angle A1 shown in the figure is the angle required to adjust the optical axis to be parallel to the flank face 530 to be machined, i.e., the first angle. While the beam 22 is removing material along the set path, the laser beam is adjusted so that at least the radial outer edge of the laser spot 23 directly acts on the material, i.e., angle A2 shown in the figure, to achieve maximum material removal efficiency.

The boundary of a three-dimensional machining area includes at least one two-dimensional machining area that falls on the material (e.g., diamond), forming an interface with the material. The angle between the boundary of the three-dimensional machining area falling on the material (e.g., diamond) and the axis of the workpiece depends on the type and type of cutting tool. For example, when the cutting tool is a drill bit, the angle is the angle between the line formed by the two-dimensional machining area and the material and the axis of the bar stock, such as 40 degrees to 55 degrees; or, when the cutting tool is a milling cutter, the angle is the angle between the line formed by the two-dimensional machining area and the material and the axis of the bar stock, such as 90 degrees to 94 degrees.

The boundary of the three-dimensional machining area and the material (e.g., diamond) has two two-dimensional machining areas, namely a first two-dimensional machining area and a second two-dimensional machining area. The first two-dimensional machining area intersects with the second two-dimensional machining area, which respectively serve as the first flank face and the second flank face. Figure 6 is a schematic diagram of an embodiment of a machining tool with multiple flank faces manufactured using the method of the present invention. As shown in Figure 6, the first flank face 521 and the second flank face 522 are implemented using the method described above in this embodiment. First, the laser is adjusted to a first machining angle to form the first two-dimensional machining area at the boundary between the first three-dimensional machining area and the material, that is, the first flank face 521 is formed on the material. Then, the laser is adjusted to a second machining angle to form the second two-dimensional machining area at the boundary between the second three-dimensional machining area and the material, that is, the second flank face 522 is formed on the material. When the two two-dimensional machining areas are placed on the material (e.g., diamond), the first two two-dimensional machining areas and the second two-dimensional machining areas are formed first, and then the laser is adjusted to a third machining angle to form a third two-dimensional machining area. Using this method, several continuous flank faces can be machined on diamond, better meeting the needs of machining scenarios for the cutting end structure of the tool.

The diamond machined using the method of this embodiment can form a sharper cutting edge, and can efficiently form multiple sharp cutting edges, meeting the machining requirements for even sharper cutting tips. Applying the method of this embodiment to a machining machine with multiple motion axes (such as a three-axis, four-axis, or five-axis machine tool) enables automated cutting edge machining of the workpiece using lasers. For example, a laser can be used to first form a rake face on the diamond, and then form a flank face on the diamond.

To implement the method of the present invention, especially for automated and efficient implementation, it is typically necessary to configure a controller and a processor to load the code required for machining, and to control the various components of the control equipment to automatically execute according to the pre-set computer code. The code is written in a parallelepiped format, presenting the three-dimensional machining area in the form of computer code. This includes the region defined by several sets of laser start and end points, where at least the machining boundaries of the two-dimensional machining area forming the three-dimensional machining area on the diamond are all located outside the forming boundary of the flank face to be machined.

When machining the flank face, the rake face faces away from the direction of laser beam propagation, and the laser beam propagates from the back of the rake face towards the cutting side of the rake face. Simultaneously, the laser propagation direction forms a machining angle with the flank face to be machined. The laser forms a two-dimensional machining area along the set machining path from the starting point, which is the endpoint of one machining operation. The machining boundary of the two-dimensional machining area should be larger than the machining boundary of the material. The laser is controlled to move back and forth from the starting point to the endpoint along the set machining path, forming a three-dimensional machining area composed of several overlapping two-dimensional machining areas. All diamond within the three-dimensional machining area is removed by the laser, and the diamond surface at the boundary of the three-dimensional machining area is the flank face to be machined.

## Claims

1. A method for forming a cutting edge of a machining tool, comprising:
several two-dimensional machining areas (30) are defined by laser, and these two-dimensional machining areas (30) are superimposed to form the boundary of the three-dimensional machining area (40);
each two-dimensional machining area (30) is defined by the machining boundary formed by the laser movement path, during laser machining, it moves between each starting point and ending point, removes the material (50) located in the three-dimensional machining area (40), forms an interface with the material (50), and produces a flank face (500) to be machined on the material surface; and
the two-dimensional machining area (30) at the material interface has its machining boundary located outside the forming boundary (501) of the flank face (500).

2. The method according to claim 1, wherein the cutting edge is located near an axis of the material and forms a cutting tip.

3. The method according to claim 1, wherein the material (50) comprises diamond.

4. The method according to claim 1, wherein a laser is used to first form a rake face (600) on the material (50), and then the flank face (500) to be machined is formed on the material (50).

5. The method according to claim 1, wherein the laser is used such that the rake face (600) faces away from a propagation direction of the laser beam (20).

6. The method according to claim 1, wherein a starting point at which the laser beam (20) ablates the material (50) is located opposite the rake face (600), and the laser beam (20) reaches a space surrounding a cutting side (601) of the rake face (600).

7. The method according to claim 1, wherein the propagation direction of the laser beam (20) forms a machining angle with the flank face (500) to be machined;wherein the machining angle is a sum of a first angle (A1) and a second angle (A2), the first angle is an angle required to make an optical axis (21) of the laser parallel to the flank face (500) to be machined, and the second angle is an angle required to make a radial outer edge of a laser spot (23) contact the flank face (500) to be machined.

8. The method according to claim 1, wherein the boundary of the three-dimensional machining area (40) has at least two interfaces with the material (50), and a first flank face (521) and a second flank face (522) are generated on the surface of the material (50).

9. The method according to claim 8, wherein the boundary of the three-dimensional machining area (40) comprises a first two-dimensional machining area (30) and a second two-dimensional machining area (30) at the interface with the material (50), the first two-dimensional machining area intersects the second two-dimensional machining area, the machining boundary of the first two-dimensional machining area is located outside a forming boundary of the first flank face (521), and the machining boundary of the second two-dimensional machining area is located outside a forming boundary of the second flank face (522).

10. A machining equipment for manufacturing machining tools (10) using the method described in claim 1.

11. The machining equipment according to claim 10, further comprising a plurality of motion axes.
